(19) **Europäisches Patentamt / European Patent Office / Office européen des brevets**

(11) **EP 2 929 343 B1**

(12) **FASCICULE DE BREVET EUROPEEN**

(45) Date de publication et mention de la délivrance du brevet:
**11.01.2017 Bulletin 2017/02**

(21) Numéro de dépôt: **13799039.6**

(22) Date de dépôt: **02.12.2013**

(51) Int Cl.:
*G01N 29/06* (2006.01)  *G01N 29/07* (2006.01)
*G01N 29/11* (2006.01)  *G01N 29/26* (2006.01)

(86) Numéro de dépôt international:
**PCT/EP2013/075197**

(87) Numéro de publication internationale:
**WO 2014/086695 (12.06.2014 Gazette 2014/24)**

(54) **DISPOSITIF ET PROCÉDÉ D'IMAGERIE PAR ULTRASONS AVEC FILTRAGE DES ARTEFACTS DUS AUX INTERFÉRENCES ENTRE MODES DE RECONSTRUCTION**

VORRICHTUNG UND VERFAHREN ZUR ULTRASCHALLLBILDGEBEUNG MIT FILTERUNG VON ARTEFAKTEN AUFGRUND VON INTERFERENZEN ZWISCHEN REKONSTRUKTIONSMODEN

ULTRASOUND IMAGING APPARATUS AND METHOD WITH FILTERING OF ARTEFACTS DUE TO INTERFERENCES BETWEEN RECONSTRUCTION MODES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2012 FR 1261802**

(43) Date de publication de la demande:
**14.10.2015 Bulletin 2015/42**

(73) Titulaire: **Commissariat à l'Énergie Atomique et aux Énergies Alternatives 75015 Paris (FR)**

(72) Inventeurs:
• **CHATILLON, Sylvain
F-Palaiseau 91120 (FR)**
• **IAKOVLEVA, Ekaterina
F-91470 Limours (FR)**

• **BREDIF, Philippe
F-75013 Paris (FR)**
• **MAHAUT, Steve
F-91240 Saint-michel-sur-orge (FR)**

(74) Mandataire: **HAMMES, Pierre et al
Marks & Clerk France
Immeuble Visium
22, avenue Aristide Briand
94117 Arcueil Cedex (FR)**

(56) Documents cités:
**EP-A1- 2 053 418     US-A- 5 793 701**

• **P. CALMON ET AL: "MODEL BASED RECONSTRUCTION OF UT ARRAY DATA", AIP CONFERENCE PROCEEDINGS, vol. 975, 1 janvier 2008 (2008-01-01), pages 699-706, XP055073257, ISSN: 0094-243X, DOI: 10.1063/1.2902730**

**Description**

L'invention se situe dans le domaine de l'imagerie par ultrasons. Elle s'applique en particulier au contrôle non destructif de pièces. Le contrôle non destructif vise notamment à détecter la présence d'éventuels défauts dans une pièce, à les localiser et à les dimensionner. L'invention concerne plus particulièrement un procédé d'imagerie par ultrasons utilisant un traducteur multiélément et basé sur la technique de reconstruction appelée "focalisation en tous points".

Dans le domaine du contrôle non destructif par ultrasons, l'utilisation de traducteurs multiéléments a considérablement augmenté les possibilités d'inspection de composants industriels. Par rapport à un traducteur monoélément, un traducteur multiélément permet de focaliser un faisceau d'ondes ultrasonores en un point déterminé d'une pièce en affectant des retards d'émission appropriés aux différents éléments du traducteur. La multiplication des lois de retard permet d'imager des zones très étendues de la pièce. Une focalisation multipoints peut également être effectuée de façon synthétique par post-traitement des signaux d'acquisition des différents éléments. L'une des méthodes de focalisation synthétique les plus développées à l'heure actuelle est appelée "méthode de reconstruction par focalisation en tous points" (FTP). Cette méthode dérive de la méthode dite SAR pour "Synthetic Aperture Radar", et s'applique notamment sur une méthode d'acquisition dite "matrice inter-élément" ou FMC selon l'expression anglosaxonne "Full Matrice Capture". La méthode d'acquisition FMC consiste à émettre successivement par $M$ émetteurs à ultrasons une onde ultrasonore dans la pièce à imager, et à enregistrer dans $N$ récepteurs ultrasonores les échos provenant de la propagation des ondes émises dans la pièce à inspecter. La méthode aboutit ainsi à la formation de $M \times N$ signaux élémentaires. La méthode de reconstruction FTP consiste à sommer de façon cohérente les signaux élémentaires de manière à obtenir des maxima d'amplitude, correspondant à des interférences constructives, pour les points de la pièce où sont effectivement localisés des défauts générant des échos des ondes ultrasonores émises. La cohérence des signaux est déterminée à partir des durées de parcours théoriques des ondes ultrasonores se propageant dans la pièce entre un émetteur et un récepteur donnés et passant par le point considéré. La méthode FTP a été développée initialement pour une focalisation synthétique en mode direct. Le mode direct fait référence à des trajets directs de l'onde ultrasonore entre un émetteur, un point de la zone à imager, et un récepteur. Autrement dit, le mode direct implique des trajets dépourvus de réflexion sur une surface de la pièce. La méthode FTP a ensuite été généralisée à d'autres modes de reconstruction. On parle alors de reconstruction multi-modale, en prenant en compte des trajets d'ondes ultrasonores faisant intervenir une ou plusieurs réflexions sur des surfaces de la pièce à imager. En particulier, il est possible de tenir compte de trajets comportant une réflexion de l'onde ultrasonore sur le fond de la pièce, c'est-à-dire la surface de la pièce opposée à celle insonifiée par le traducteur multiélément émetteur. On parle dans ce cas de mode "écho de coin". La réflexion peut se produire avant ou après une interaction avec le point à reconstruire. Certains trajets peuvent aussi comporter une réflexion avant l'interaction avec le point à reconstruire, et une réflexion après. On parle alors de mode "indirect". La focalisation FTP en mode écho de coin et celle en mode indirect permettent de compléter les informations fournies par la focalisation FTP en mode direct, car elles exploitent des contributions faisant intervenir d'autres phénomènes physiques et issues d'interactions avec des parties différentes de la pièce et du défaut. Elles permettent notamment d'imager d'autres parties du défaut. Par exemple, dans certains cas, la reconstruction en mode écho de coin présente l'avantage d'imager un défaut de la pièce sur toute sa longueur, et non uniquement ses extrémités. En revanche, dans certaines configurations, la focalisation FTP multimode présente l'inconvénient de générer des maxima d'amplitude n'ayant aucune origine physique dans la pièce. Ces maxima, appelés artefacts de reconstruction, sont dus au fait que, pour un point de la zone reconstruction, le temps de vol théorique du trajet calculé pour le mode courant peut être identique, ou sensiblement identique, au temps de vol d'une contribution réelle et correspondant à un mode de propagation différent dans la pièce. Par exemple, la durée de parcours théorique d'une onde en mode écho de coin peut être sensiblement égale à la durée de parcours effective en mode direct et interagissant avec le fond de la pièce. Tel est notamment le cas pour les points à reconstruire situés sous le traducteur multiélément. Pour certaines configurations, la méthode FTP en mode écho de coin peut donc interpréter un écho de fond en mode direct comme étant un écho en mode écho de coin provenant d'un défaut situé sous le capteur. La seule prise en compte des temps de vol ne permet donc pas de distinguer, pour tous les trajets possibles, un point correspondant à un écho sur le fond de la pièce d'un point correspondant à un éventuel défaut de la pièce.

On connait par ailleurs le document P.Calmon et al : « Model based reconstruction of UT array data », AIP conférence proceedings, vol 975, 1 janvier 2008, pages 699-706, qui décrit un procédé d'imagerie par ultrasons selon l'art antérieur

Un but de l'invention est notamment de remédier au problème des artefacts de reconstruction en mode écho de coin en fournissant un procédé d'imagerie par ultrasons filtrant ces artefacts. A cet effet, l'invention a pour objet un procédé d'imagerie par ultrasons pour imager une pièce. Le procédé comprend les étapes suivantes :

- acquérir un ensemble de $M \times N$ signaux ultrasonores $S_{ij}(t)$, où $M$ est le nombre d'émetteurs pouvant émettre un signal ultrasonore dans la pièce à imager, $N$ est le nombre de récepteurs pouvant recevoir l'un des signaux ultrasonores $S_{ij}(t)$ provenant de la pièce à imager, l'indice $i$ désigne l'un des émetteurs, l'indice $j$ désigne l'un des récepteurs, et *t* est une variable représentant le temps,

- pour chaque point *P* d'une zone de la pièce à imager et pour chaque couple émetteur-récepteur *ij*,

  - déterminer un temps de vol $T_{ij}(P)$ correspondant à une durée théorique nécessaire au signal ultrasonore $S_{ij}(t)$ pour parcourir un trajet depuis l'émetteur *i* jusqu'au *récepteur j* en passant par le point *P*,
  - déterminer un angle $\theta_{ij}(P)$ formé entre une portion du trajet rejoignant le point *P*, et une portion du trajet quittant le point P,

- pour chaque point *P*, déterminer une somme pondérée *I(P)* des amplitudes extraites des signaux $S_{ij}(t)$ aux temps de vol $T_{ij}(P)$ correspondant au point *P* considéré :

$$I(P) = \sum_{i=1}^{N} \sum_{j=1}^{M} f\left(\theta_{ij}(P)\right) . S_{ij}\left(T_{ij}(P)\right)$$

où $f(\theta_{ij}(P))$ est une fonction de pondération déterminée de manière à atténuer les signaux $S_{ij}(T_{ij}(P))$ correspondant aux trajets dont l'angle $\theta_{ij}(P)$ est voisin de $\pi$ par rapport aux signaux $S_{ij}(T_{ij}(P))$ correspondant aux trajets dont l'angle $\theta_{ij}(P)$ est voisin de la valeur nulle.

Selon une première forme de réalisation, la fonction de pondération $f(\theta_{ij}(P))$ est une fonction seuil prenant la valeur nulle pour les angles $\theta_{ij}(P)$ compris dans une plage de valeurs [$\pi$ - $\theta_{seuil}$; $\pi$ + $\theta_{seuil}$], et la valeur un pour les autres angles.

Selon une deuxième forme de réalisation, la fonction de pondération $f(\theta_{ij}(P))$ est une fonction affine prenant la valeur nulle pour un angle $\theta_{ij}(P)$ sensiblement égal à $\pi$, et la valeur un pour un angle $\theta_{ij}(P)$ sensiblement égal à la valeur nulle.

Selon une troisième forme de réalisation, la fonction de pondération $f(\theta_{ij}(P))$ est définie comme suit :

$$f\left(\theta_{ij}(P)\right) = cos^2\left(\theta_{ij}(P)/2\right)$$

Chaque trajet entre un émetteur *i* et un *récepteur j* peut être formé de plusieurs portions, chaque portion étant définie entre deux points d'interaction successifs, les points d'interaction étant les émetteurs *i*, les récepteurs *j*, les points *P*, et des surfaces de réflexion de la pièce à imager. Chaque suite de points d'interaction définit un mode. Une somme pondérée *I(P)* peut alors être déterminée pour chaque mode. En outre, les temps de vol $T_{ij}(P)$ peuvent être déterminés en fonction d'une polarisation du signal ultrasonore dans chaque portion du trajet entre l'émetteur *i* et le récepteur *j* considérés.

L'invention a également pour objet un dispositif d'imagerie par ultrasons permettant de mettre en oeuvre le procédé selon l'invention. En particulier, le dispositif comprend :

- *M* émetteurs aptes à émettre un signal ultrasonore dans la pièce à imager,
- *N* récepteurs aptes à recevoir l'un des $M \times N$ signaux ultrasonores $S_{ij}(t)$, où l'indice *i* désigne l'un des émetteurs, l'indice *j* désigne l'un des récepteurs, et t est une variable représentant le temps,
- des premiers moyens de traitement permettant de déterminer, pour chaque point *P* d'une zone de la pièce à imager et pour chaque couple émetteur-récepteur *ij*, un temps de vol $T_{ij}(P)$ correspondant à une durée théorique nécessaire au signal ultrasonore $S_{ij}(t)$ pour parcourir un trajet depuis l'émetteur *i* jusqu'au *récepteur j* en passant par le point *P*,
- des deuxièmes moyens de traitement permettant de déterminer, pour chaque point *P* d'une zone de la pièce à imager et pour chaque couple émetteur-récepteur *ij*, un angle $\theta_{ij}(P)$ formé entre une portion du trajet rejoignant le point *P*, et une portion du trajet quittant le point *P*,
- des troisièmes moyens de traitement permettant de déterminer, pour chaque point *P*, une somme pondérée *I(P)* des amplitudes extraites des signaux $S_{ij}(t)$ aux temps de vol $T_{ij}(P)$ correspondant au point *P* considéré :

$$I(P) = \sum_{i=1}^{N} \sum_{j=1}^{M} f\left(\theta_{ij}(P)\right) . S_{ij}\left(T_{ij}(P)\right)$$

où $f(\theta_{ij}(P))$ est une fonction de pondération déterminée de manière à atténuer les signaux $S_{ij}(T_{ij}(P))$ correspondant aux trajets dont l'angle $\theta_{ij}(P)$ est voisin de $\pi$ par rapport aux signaux $S_{ij}(T_{ij}(P))$ correspondant aux trajets dont l'angle $\theta_{ij}(P)$ est voisin de la valeur nulle.

Les émetteurs et/ou les récepteurs peuvent être disposés de différentes manières, par exemple de façon linéaire, matricielle ou annulaire. Dans le cas d'une disposition linéaire ou matricielle, le ou les axes des récepteurs peuvent être parallèles ou perpendiculaires à le ou les axes des émetteurs. Par ailleurs, les émetteurs et/ou les récepteurs peuvent chacun présenter une forme quelconque, notamment une forme annulaire.

L'invention présente notamment l'avantage de filtrer les trajets en mode écho de coin ne correspondant pas à une réalité physique, tout en conservant intacte l'image des défauts de la pièce.

L'invention sera mieux comprise et d'autres avantages apparaîtront à la lecture de la description qui va suivre, faite en regard de dessins annexés sur lesquels :

- la figure 1 représente schématiquement un exemple de pièce à imager sur laquelle est disposé un traducteur multiélément ;
- la figure 2 illustre un premier mode de reconstruction, appelé mode direct ;
- les figures 3A et 3B illustrent un deuxième mode de reconstruction, appelé mode écho de coin ;
- la figure 4 illustre un troisième mode de reconstruction, appelé mode indirect ;
- la figure 5A représente un exemple de trajet en mode direct avec une polarisation transversale de l'onde ultrasonore et la figure 5B représente une image obtenue par ce mode de reconstruction ;
- la figure 6A représente un exemple de trajet en mode écho de coin avec une polarisation transversale de l'onde ultrasonore et la figure 6B représente une image obtenue par ce mode de reconstruction ;
- la figure 7 représente, par un logigramme, un exemple de procédé d'imagerie basé sur une méthode de reconstruction par focalisation en tous points sans filtrage des artefacts ;
- la figure 8A montre un exemple d'image obtenue par le procédé de la figure 7 comportant des artefacts, et les figures 8B et 8C illustrent l'origine de ces artefacts ;
- la figure 9 représente, par un logigramme, un exemple de procédé d'imagerie selon l'invention ;
- les figures 10A à 10C représentent des exemples d'images obtenues par le procédé de la figure 9 en mode écho de coin avec une fonction de pondération prenant trois valeurs seuils différentes ;
- les figures 11A à 11C représentent des exemples d'images obtenues par le procédé de la figure 7 en mode écho de coin pour différentes polarisations ;
- les figures 12A à 12C représentent des images équivalentes aux images 11 A à 11C mais obtenues par le procédé de la figure 9 avec une fonction de pondération sinusoïdale.

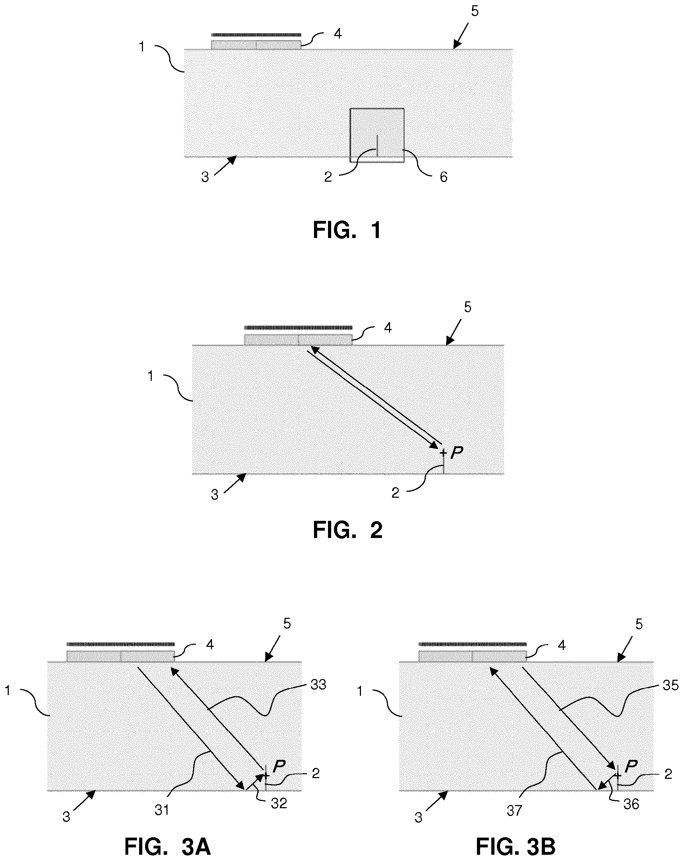

La figure 1 représente schématiquement un exemple de pièce à imager comportant un défaut et sur laquelle est disposé un traducteur multiélément. La pièce 1 comprend une entaille 2 s'étendant depuis l'une de ses surfaces 3. Un traducteur multiélément 4 est disposé sur une surface 5 de la pièce 1 opposée à la surface 3, afin de détecter la présence d'un éventuel défaut dans une zone de reconstruction 6. À titre d'exemple, on considère ici un traducteur linéaire comportant 48 éléments. Chaque élément comprend un émetteur apte à générer une onde ultrasonore à la surface 3 de la pièce 1, et un récepteur apte à délivrer un signal correspondant à un écho d'une onde ultrasonore générée par l'un des émetteurs. Les ondes ultrasonores ont par exemple une fréquence égale à 2 mégahertz. De manière générale, on considère un traducteur multiélément comprenant M émetteurs et N récepteurs, et on note $S_{ij}(t)$ les signaux délivrés par les récepteurs, où l'indice $i$ désigne l'un des émetteurs, l'indice $j$ désigne l'un des récepteurs, et la variable t représente le temps. Les émetteurs émettent successivement une onde ultrasonore, de sorte que $M \times N$ signaux $S_{ij}(t)$ peuvent être générés pour une acquisition donnée. Une telle méthode d'acquisition est appelée méthode de type "matrice inter-élément", ou "Full Matrice Capture" (FMC) en anglais.

L'invention repose également sur une méthode de focalisation synthétique appelée "méthode de reconstruction par focalisation en tous points" (FTP). Cette méthode consiste à sommer de manière cohérente les signaux $S_{ij}(t)$ de manière à obtenir des maxima d'amplitude aux endroits de la pièce où sont effectivement localisés des défauts. La cohérence des signaux pour un point $P$ donné est déterminée à partir des durées de parcours théoriques des ondes ultrasonores le long de différents trajets entre les émetteurs $i$ et les récepteurs $j$ passant par le point $P$. Les trajets considérés peuvent être plus ou moins complexes, selon le nombre d'interactions que les ondes ultrasonores subissent sur des surfaces de la pièce. La méthode FTP peut prendre en compte différents types de trajets ; elle est alors qualifiée de multimode. Pour la suite de la description, on appelle points d'interaction les différents points où une onde ultrasonore est susceptible de subir une déviation. Il s'agit des points sur les surfaces de la pièce, ainsi que des points $P$ de la zone de reconstruction où un défaut est supposé se trouver. Par extension, on considère également les émetteurs et les récepteurs du traducteur comme des points d'interaction. Un trajet d'onde ultrasonore peut ainsi être défini de manière univoque par une suite de points d'interaction.

La figure 2 illustre un premier mode de reconstruction, appelé mode direct. Dans ce mode, on considère que chaque onde ultrasonore suit un trajet direct, c'est-à-dire qu'elle est émise depuis l'un des émetteurs vers un point P de la zone de reconstruction, et qu'elle est réémise depuis le point P vers l'un des récepteurs. Le trajet ne subit donc pas de réflexion sur l'une des surfaces de la pièce.

Les figures 3A et 3B illustrent un deuxième mode de reconstruction, appelé mode écho de coin. Dans ce mode, on considère les ondes ultrasonores subissant une seule réflexion sur l'une des surfaces de la pièce 1. La figure 3A représente un écho de coin se produisant avant une interaction avec un point P de la zone de reconstruction. Le trajet de l'onde ultrasonore comprend ainsi une première portion 31 entre l'un des émetteurs du traducteur 4 et une surface de la pièce 1, en l'occurrence la surface 3, une deuxième portion 32 entre la surface 3 de la pièce 1 et le point P de la zone de reconstruction, et une troisième portion 33 entre le point P et l'un des récepteurs du traducteur 4. La figure 3B représente un écho de coin se produisant après une interaction de l'onde ultrasonore avec un point P de la zone de reconstruction. Le trajet de l'onde ultrasonore comprend ainsi une première portion 35 entre l'un des émetteurs et le point P, une deuxième portion 36 entre le point P et la surface 3, et une troisième portion 37 entre la surface 3 et l'un des récepteurs.

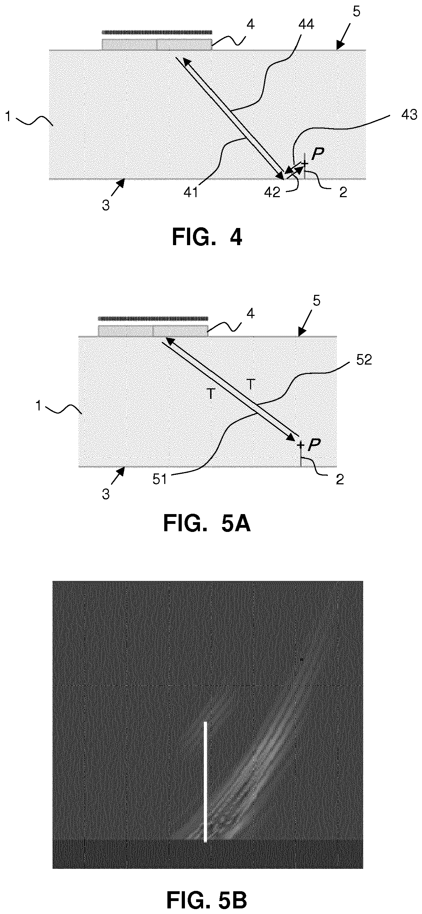

La figure 4 illustre un troisième mode de reconstruction, appelé mode indirect. Dans ce mode, on considère les ondes ultrasonores subissant deux réflexions sur une surface de la pièce. En l'occurrence, sur la figure 4 est représenté un trajet comprenant une première portion 41 entre l'un des émetteurs du traducteur 4 et la surface 3, une deuxième portion 42 entre la surface 3 et un point $P$ de la zone de reconstruction, une troisième portion 43 entre le point $P$ et la surface 3, et une quatrième portion 44 entre la surface 3 et l'un des récepteurs. Plus généralement, le mode indirect peut aussi prendre en compte des trajets comprenant une première réflexion sur l'une des surfaces de la pièce, et une deuxième réflexion sur une autre surface de la pièce.

En plus des différents modes de reconstruction, la méthode de reconstruction FTP peut prendre en considération la polarisation des ondes ultrasonores, longitudinale ou transversale. Plus précisément, elle peut tenir compte de la polarisation dans les différentes portions du trajet, sachant qu'une onde peut passer d'une polarisation longitudinale à transversale (ou inversement) à chaque point d'interaction par le processus dit de conversion de mode. La polarisation d'une onde influe sur sa vitesse de propagation, et donc sur la durée de parcours entre un émetteur et un récepteur.

Les figures 5A et 5B illustrent un mode de reconstruction direct dans lequel l'onde ultrasonore a une polarisation transversale tout le long du trajet, à savoir sur une portion 51 entre un émetteur et un point $P$, et sur une portion 52 entre le point $P$ et un récepteur. En notant L et T des portions de trajet pour lesquelles l'onde ultrasonore présente une polarisation longitudinale ou transversale, respectivement, et d l'interaction au point $P$, le mode de reconstruction de la figure 5A peut être appelé "mode direct TdT". La figure 5B représente l'amplitude de la somme des signaux $S_{ij}(t)$ pour les différents points P de la zone de reconstruction considérée dans ce mode.

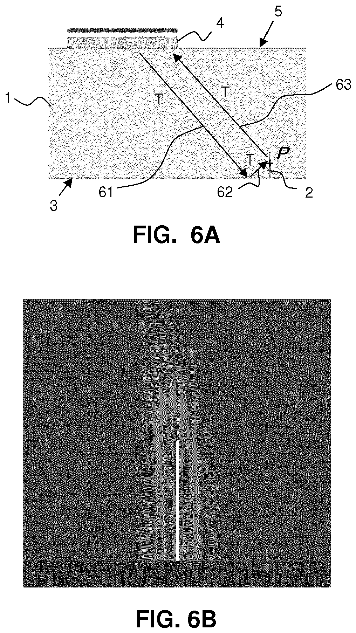

Les figures 6A et 6B illustrent un mode de reconstruction écho de coin dans lequel l'onde ultrasonore a une polarisation transversale tout le long du trajet, à savoir sur une portion 61 entre un émetteur et la surface 3, sur une portion 62 entre la surface 3 et un point $P$, et sur une portion 63 entre le point $P$ et un récepteur. Ce mode de reconstruction est appelé "mode écho de coin TTdT". La figure 6B représente l'amplitude de la somme des signaux $S_{ij}(t)$ pour les différents points $P$ de la zone de reconstruction considérée dans ce mode. Les figures 5B et 6B mettent par ailleurs en évidence le fait que le mode direct permet de visualiser uniquement les extrémités d'une entaille dans la pièce, alors que le mode écho de coin permet de visualiser l'entaille sur toute sa longueur.

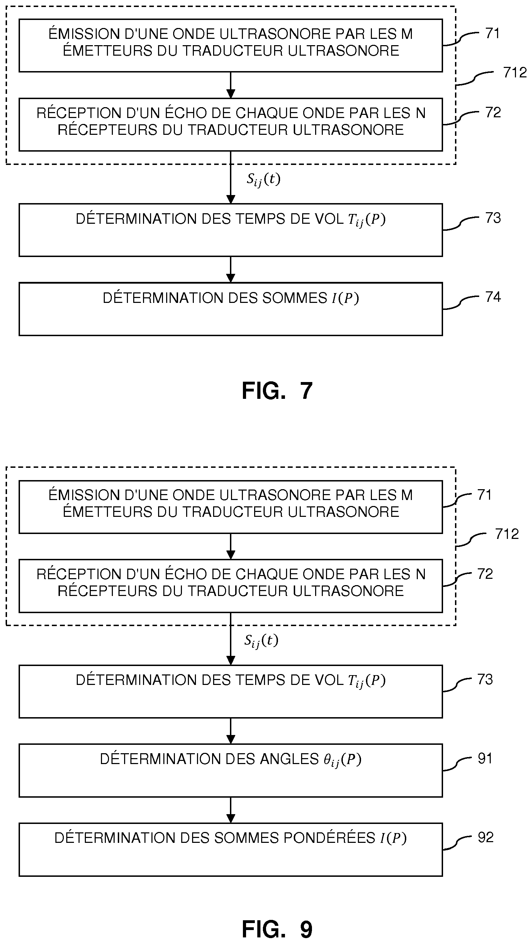

La figure 7 représente, par un logigramme, un exemple de procédé d'imagerie basé sur la méthode de reconstruction FTP. On considère à titre d'exemple la configuration représentée sur la figure 1, dans laquelle la pièce 1 comprend une entaille s'étendant depuis la surface 3, le traducteur multiélément 4 étant disposé sur la surface 5. Dans une étape 71, chacun des $M$ émetteurs, indicés $i$, du traducteur génère successivement et individuellement une onde ultrasonore dans la pièce 1 depuis l'une de ses surfaces, en l'occurrence depuis la surface 5. Dans une étape 72, chacun des $N$ récepteurs, indicés $j$, du traducteur reçoit un signal ultrasonore issu de la propagation de l'onde ultrasonore émise lors de l'étape 71 par un émetteur $i$. Un signal ultrasonore est reçu pour chaque émetteur $i$, donnant ainsi un signal $S_{ij}(t)$ représentatif de l'écho d'onde reçu pour une émission par l'émetteur $i$ et une réception par le récepteur $j$. Les étapes 71 et 72 sont représentées comme étant réalisées successivement. En réalité, ces étapes sont imbriquées : une nouvelle émission d'une onde ultrasonore par un émetteur $i + 1$ n'est réalisée qu'une fois que les signaux $S_{ij}(t)$ ont été générés par les $N$ récepteurs en réponse à l'onde émise par l'émetteur $i$. Les étapes 71 et 72 permettent ainsi de générer un ensemble de $M \times N$ signaux $S_{ij}(t)$. Ces étapes forment globalement une étape d'acquisition 712. Dans une étape 73, on détermine pour chaque point $P$ de la zone de reconstruction et pour chaque couple émetteur-récepteur $ij$, une durée théorique nécessaire à l'onde ultrasonore émise par l'émetteur $i$ pour rejoindre le récepteur $j$ en passant par le point $P$. Cette étape peut être réalisée pour chaque mode de reconstruction (direct, écho de coin ou indirect), et pour chaque type de polarisation des ondes ultrasonores. Les durées théoriques sont nommées temps de vol $T_{ij}(P)$. Dans une étape 74, on détermine pour chaque point $P$, une somme $I(P)$ des amplitudes extraites des signaux $S_{ij}(t)$ aux temps de vol $t = T_{ij}(P)$. Autrement dit, on somme les amplitudes des $M \times N$ signaux aux instants correspondant aux durées respectives nécessaires pour rejoindre l'un des récepteurs depuis l'un des émetteurs en passant par le point $P$ considéré. La somme *I(P)* peut être formulée par l'expression suivante :

$$I(P) = \sum_{i=1}^{N} \sum_{j=1}^{M} S_{ij}\left(T_{ij}(P)\right)$$

L'étape 74 est réalisée individuellement pour chaque mode de reconstruction et pour chaque type de polarisation considéré. Un exemple d''image obtenue par ce procédé est représenté sur la figure 5B pour le mode direct TdT, et sur la figure 6B pour le mode écho de coin TTdT.

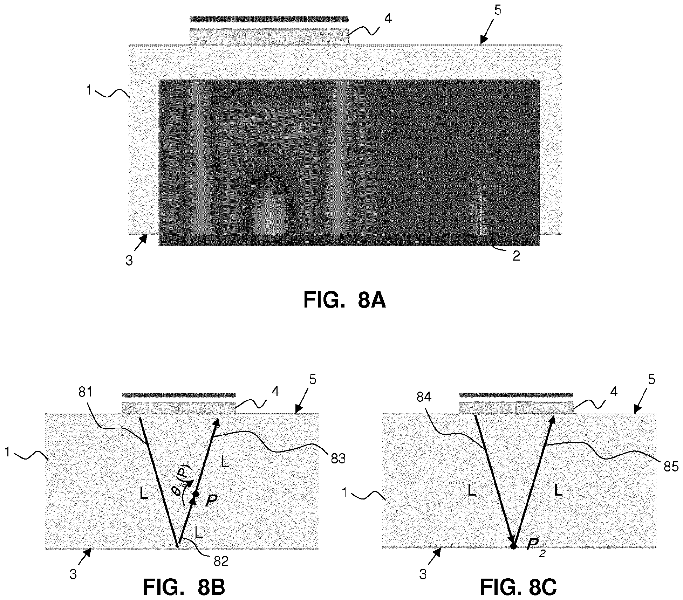

La figure 8A montre la présence d'artefacts dans un exemple d'image obtenue par le procédé de la figure 7 en mode écho de coin, et les figures 8B et 8C illustrent l'origine de ces artefacts. Sur la figure 8A, il apparaît que les artefacts se produisent sous la surface du traducteur 4. La figure 8B représente le trajet théoriquement suivi par une onde ultrasonore en mode écho de coin LLdL en considérant un émetteur *i*, un *récepteur j* et un point de reconstruction P situé sous le traducteur 4. Ce trajet comprend une première portion 81 entre l'émetteur *i* et la surface 3, une deuxième portion 82 entre la surface 3 et le point *P*, et une troisième portion 83 entre le point *P* et le récepteur *j*. La figure 8C représente le trajet suivi par une onde ultrasonore en mode direct LdL en considérant le même émetteur *i* et le même récepteur *j*, et un point de reconstruction $P_2$ situé sur la surface 3 au point d'interaction entre les portions 81 et 82 du trajet de la figure 8B. Ce trajet direct comprend une première portion 84 entre l'émetteur *i* et le point $P_2$, et une deuxième portion 85 entre le point $P_2$ et le récepteur *j*. À la lecture des figures 8B et 8C, il est clair que le trajet en mode écho de coin est identique au trajet en mode direct. En particulier, la portion 81 du trajet en mode écho de coin est identique à la portion 84 du mode direct, et la somme des portions 82 et 83 est identique à la portion 85. En conséquence, le temps de vol $T_{ij}(P)$ du mode écho de coin est égal au temps de vol $T_{ij}(P_2)$ du mode direct. Lors de la reconstruction du point *P* en mode écho de coin, un maximum va ainsi se former du fait du temps de vol identique en mode direct. L'invention a pour objet de supprimer la contribution des trajets en mode écho de coin qui correspondent en réalité à des trajets en mode direct. Elle apporte une solution à ce problème en tenant compte de l'angle $\theta_{ij}(P)$ formé entre la portion du trajet rejoignant le point de reconstruction *P*, et la portion quittant le point *P*. En l'occurrence, il s'agit de l'angle $\theta_{ij}(P)$ formé entre la portion 82 et la portion 83. En fait, les trajets en mode écho de coin dont l'angle $\theta_{ij}(P)$ est voisin de $\pi$ n'ont pas de sens physique. Si la pièce 1 présente effectivement un défaut au point *P*, alors l'onde ultrasonore arrivant à ce point *P* subit nécessairement une déviation.

La figure 9 représente, par un logigramme, un exemple de procédé d'imagerie selon l'invention. Ce procédé se base toujours sur la méthode de reconstruction FTP. Le procédé comprend les étapes 71, 72 et 73 du procédé de la figure 7. Il comprend en outre une étape 91 dans laquelle les angles $\theta_{ij}(P)$ sont déterminés pour chaque point *P* de la zone à imager et pour chaque couple émetteur-récepteur *ij*.

Par exemple, l'angle $\theta_{ij}(P)$ peut être déterminé à partir du produit scalaire entre le vecteur directeur $\vec{e}_{ip}$ de la direction entre l'émetteur i et le point P (direction dite « aller ») et le vecteur directeur $\vec{r}_{pj}$ de la direction entre le point P et le récepteur j (direction dite « retour »). Ces deux vecteurs directeurs peuvent être déterminés lors du calcul des temps de vol $T_{ij}(P)$.

Le produit scalaire entre les deux vecteurs directeurs précités peut s'écrire sous la forme suivante :

$$\vec{e}_{ip} \cdot \vec{r}_{pj} = \left|\vec{e}_{ip}\right|\left|\vec{r}_{pj}\right| cos\left(\theta_{ij}(P)\right),$$

où « ▪ » est le symbole du produit scalaire et « |.|» est la norme euclidienne d'un vecteur. A partir de l'équation ci-dessus, on en déduit une expression de l'angle :

$$\theta_{ij}(P) = arccos\left(\frac{\vec{e}_{ip} \cdot \vec{r}_{pj}}{\left|\vec{e}_{ip}\right|\left|\vec{r}_{pj}\right|}\right)$$

L'étape 74 du procédé de la figure 7 est substituée par une étape 92 dans laquelle les sommes *I(P)* des amplitudes extraites des signaux $S_{ij}(t)$ sont pondérées en fonction des angles $\theta_{ij}(P)$ déterminés lors de l'étape 91. La pondération des signaux $S_{ij}(t)$ peut être effectuée au moyen d'une fonction de pondération $f(\theta_{ij}(P))$. Cette fonction doit être déterminée de manière à atténuer les signaux $S_{ij}(T_{ij}(P))$ correspondant aux trajets dont l'angle $\theta_{ij}(P)$ est voisin de $\pi$ par rapport aux signaux $S_{ij}(T_{ij}(P))$ correspondant aux trajets dont l'angle $\theta_{ij}(P)$ est voisin de la valeur nulle. La somme *I(P)* peut alors être formulée par l'expression suivante :

$$I(P) = \sum_{i=1}^{N} \sum_{j=1}^{M} f\left(\theta_{ij}(P)\right).S_{ij}\left(T_{ij}(P)\right)$$

Il est à noter que les signaux $S_{ij}(t)$ peuvent en outre subir différentes transformations. Par exemple, la transformée de Hilbert peut être appliquée à ces signaux.

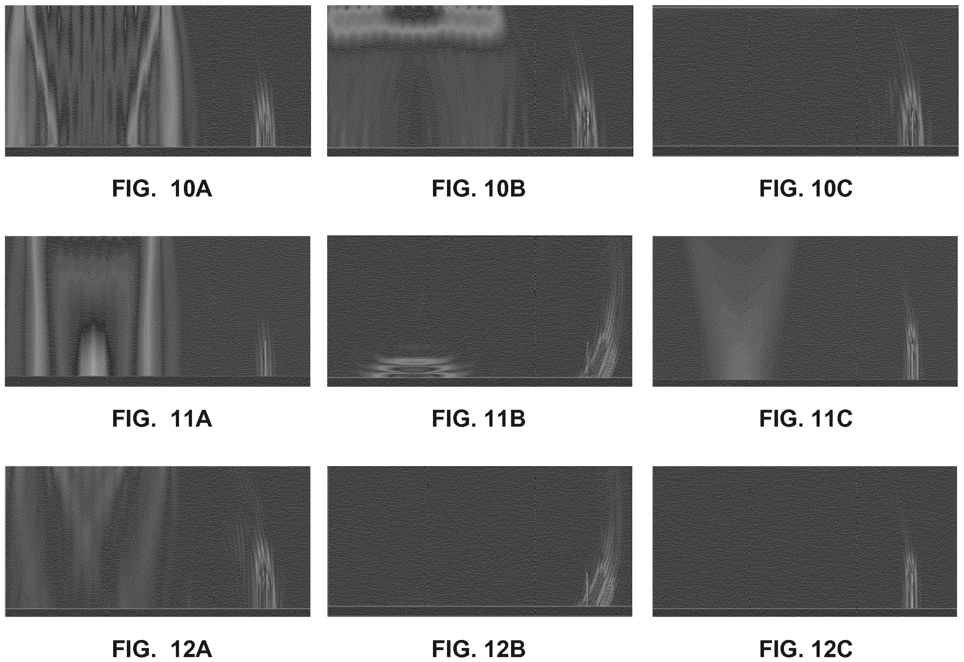

Selon une forme particulière de réalisation, la fonction de pondération $f(\theta_{ij}(P))$ est une fonction seuil prenant la valeur nulle pour les angles $\theta_{ij}(P)$ compris dans une plage de valeurs $[\pi - \theta_{seuil}; \pi + \theta_{seuil}]$, et la valeur un pour les autres valeurs d'angle. Une telle fonction est qualifiée de seuillage dur. À titre d'exemple, la valeur seuil $\theta_{seuil}$ peut prendre la valeur 10 degrés, 30 degrés ou 60 degrés. Les figures 10A à 10C représentent des exemples d'images obtenues par le procédé de la figure 9 en mode écho de coin LLdL avec une fonction de pondération dont la valeur seuil $\theta_{seuil}$ prend respectivement les valeurs 10 degrés, 30 degrés et 60 degrés.

La détermination de la valeur seuil $\theta_{seuil}$ permettant de supprimer les artefacts sans altérer la reconstruction des défauts dans la pièce peut s'avérer délicate pour certaines géométries de pièces. Pour cette raison, il est parfois préférable d'utiliser une fonction de pondération variant continûment entre la valeur nulle et la valeur un. La fonction de pondération $f(\theta_{ij}(P))$ est par exemple une fonction affine prenant la valeur nulle pour un angle $\theta_{ij}(P)$ sensiblement égal à $\pi$, et la valeur un pour un angle $\theta_{ij}(P)$ sensiblement égal à la valeur nulle. Entre ces deux valeurs, la fonction de pondération $f(\theta_{ij}(P))$ prend une valeur intermédiaire.

La fonction de pondération $f(\theta_{ij}(P))$ peut aussi être définie par une fonction sinusoïdale. Elle prend par exemple la forme suivante :

$$f\left(\theta_{ij}(P)\right) = cos^2\left(\theta_{ij}(P)/2\right)$$

Les figures 11A à 11C représentent des exemples d'images obtenues par le procédé de la figure 7 en mode écho de coin LLdL, TLdT, et TTdT, respectivement, et les figures 12A à 12C représentent des exemples d'images obtenues par le procédé selon l'invention utilisant la fonction définie ci-dessus dans ces mêmes modes. La fonction sinusoïdale présente l'avantage de ne pas nécessiter de paramètre.

L'invention a été décrite en considérant un traducteur multiélément linéaire. Dans un tel traducteur, les émetteurs et les récepteurs sont disposés linéairement. Généralement, l'axe sur lequel s'alignent les émetteurs est parallèle à l'axe sur lequel s'alignent les récepteurs. Les différents éléments du traducteur peuvent être utilisés à la fois en émission et en réception. De manière plus générale, l'invention s'applique à des reconstructions FTP en trois dimensions. Un traducteur à découpe multi-éléments en deux dimensions, par exemple matriciel, annulaire ou sectoriel est alors utilisé. Dans un traducteur matriciel, les éléments (émetteurs et/ou récepteurs) sont disposés le long de lignes et de colonnes. Ils ont généralement une forme rectangulaire ou circulaire. Néanmoins, ils peuvent présenter d'autres formes. En outre, les axes de la matrice d'émetteurs sont généralement parallèles aux axes de la matrice de récepteurs. Par traducteur annulaire, on entend un traducteur dans lequel chaque élément présente une forme annulaire. Les différents éléments forment par exemple des anneaux concentriques. Par traducteur sectoriel, on entend un traducteur dans lequel chaque élément présente une forme déterminée, par exemple une portion d'anneau. De manière générale, les émetteurs et les récepteurs peuvent prendre n'importe quelle forme, et être disposés de manière quelconque les uns par rapport aux autres, dans un plan ou dans l'espace. Par ailleurs, l'invention a été décrite en considérant que le traducteur multiélément est au contact direct de la pièce à imager. Cependant, l'invention s'applique tout aussi bien en utilisant des capteurs en immersion ou en interposant un sabot entre le traducteur multiélément et la pièce à imager. Les temps de vol sont alors déterminés en conséquence.

L'invention porte aussi sur un dispositif d'imagerie permettant de mettre en oeuvre le procédé d'imagerie décrit ci-dessus. Le dispositif comprend alors de préférence un traducteur multiélément, et différents moyens permettant de réaliser les étapes 73, 91 et 92 décrites en référence à la figure 9. Ces moyens peuvent être mis en oeuvre sous forme matérielle, logicielle, ou par un mix entre ces deux formes.

**Revendications**

**1.** Procédé d'imagerie par ultrasons pour imager une pièce (1), le procédé comprenant les étapes suivantes :

■ acquérir (712) un ensemble de $M \times N$ signaux ultrasonores $S_{ij}(t)$, où $M$ est le nombre d'émetteurs pouvant émettre un signal ultrasonore dans la pièce à imager (1), $N$ est le nombre de récepteurs pouvant recevoir l'un des signaux ultrasonores $S_{ij}(t)$ provenant de la pièce à imager, l'indice $i$ désigne l'un des émetteurs, l'indice $j$ désigne l'un des récepteurs, et t est une variable représentant le temps,

■ pour chaque point $P$ d'une zone (6) de la pièce à imager et pour chaque couple émetteur-récepteur $ij$,

- déterminer (73) un temps de vol $T_{ij}(P)$ correspondant à une durée théorique nécessaire au signal ultrasonore $S_{ij}(t)$ pour parcourir un trajet depuis l'émetteur $i$ jusqu'au *récepteur j* en passant par le point $P$,
- déterminer (91) un angle $\theta_{ij}(P)$ formé entre une portion du trajet (82) rejoignant le point $P$, et une portion du trajet (83) quittant le point $P$,

■ pour chaque point $P$, déterminer (92) une somme pondérée $I(P)$ des amplitudes extraites des signaux $S_{ij}(t)$ aux temps de vol $T_{ij}(P)$ correspondant au point P considéré :

$$I(P) = \sum_{i=1}^{N} \sum_{j=1}^{M} f\left(\theta_{ij}(P)\right).S_{ij}\left(T_{ij}(P)\right)$$

où $f(\theta_{ij}(P))$ est une fonction de pondération déterminée de manière à atténuer les signaux $S_{ij}(T_{ij}(P))$ correspondant aux trajets dont l'angle $\theta_{ij}(P)$ est voisin de $\pi$ par rapport aux signaux $S_{ij}(T_{ij}(P))$ correspondant aux trajets dont l'angle $\theta_{ij}(P)$ est voisin de la valeur nulle.

2. Procédé selon la revendication 1, dans lequel la fonction de pondération $f(\theta_{ij}(P))$ est une fonction seuil prenant la valeur nulle pour les angles $\theta_{ij}(P)$ compris dans une plage de valeurs $[\pi - \theta_{seuil}; \pi + \theta_{seuil}]$, et la valeur un pour les autres angles.

3. Procédé selon la revendication 1, dans lequel la fonction de pondération $f(\theta_{ij}(P))$ est une fonction affine prenant la valeur nulle pour un angle $\theta_{ij}(P)$ sensiblement égal à $\pi$, et la valeur un pour un angle $\theta_{ij}(P)$ sensiblement égal à la valeur nulle.

4. Procédé selon la revendication 1, dans lequel la fonction de pondération $f(\theta_{ij}(P))$ est définie comme suit :

$$f\left(\theta_{ij}(P)\right) = cos^2\left(\theta_{ij}(P)/2\right)$$

5. Procédé selon l'une des revendications précédentes, dans lequel chaque trajet entre un émetteur $i$ et un récepteur $j$ est formé de plusieurs portions (81, 82, 83), chaque portion étant définie entre deux points d'interaction successifs, les points d'interaction étant les émetteurs $i$, les récepteurs $j$, les points $P$, et des surfaces de réflexion (3, 5) de la pièce à imager (1), chaque suite de points d'interaction définissant un mode, une somme pondérée $I(P)$ étant déterminée pour chaque mode.

6. Procédé selon la revendication 5, dans lequel les temps de vol $T_{ij}(P)$ sont déterminés en fonction d'une polarisation du signal ultrasonore dans chaque portion du trajet (81, 82, 83) entre l'émetteur $i$ et le *récepteur j* considérés.

7. Dispositif d'imagerie par ultrasons permettant d'imager une pièce, le dispositif comprenant :

■ M émetteurs (4) aptes à émettre un signal ultrasonore dans la pièce à imager (1),
■ N récepteurs (4) aptes à recevoir l'un des $M \times N$ signaux ultrasonores $S_{ij}(t)$, où l'indice $i$ désigne l'un des émetteurs, l'indice $j$ désigne l'un des récepteurs, et t est une variable représentant le temps,
■ des premiers moyens de traitement permettant de déterminer, pour chaque point $P$ d'une zone de la pièce à imager et pour chaque couple émetteur-récepteur $ij$, un temps de vol $T_{ij}(P)$ correspondant à une durée théorique nécessaire au signal ultrasonore $S_{ij}(t)$ pour parcourir un trajet depuis l'émetteur $i$ jusqu'au *récepteur j* en passant par le point $P$,
■ des deuxièmes moyens de traitement permettant de déterminer, pour chaque point $P$ d'une zone de la pièce à imager et pour chaque couple émetteur-récepteur $ij$, un angle $\theta_{ij}(P)$ formé entre une portion du trajet (82) rejoignant le point $P$, et une portion du trajet (83) quittant le point $P$,

■ des troisièmes moyens de traitement permettant de déterminer, pour chaque point $P$, une somme pondérée $I(P)$ des amplitudes extraites des signaux $S_{ij}(t)$ aux temps de vol $T_{ij}(P)$ correspondant au point $P$ considéré :

$$I(P) = \sum_{i=1}^{N} \sum_{j=1}^{M} f\left(\theta_{ij}(P)\right).S_{ij}\left(T_{ij}(P)\right)$$

où $f(\theta_{ij}(P))$ est une fonction de pondération déterminée de manière à atténuer les signaux $S_{ij}(T_{ij}(P))$ correspondant aux trajets dont l'angle $\theta_{ij}(P)$ est voisin de $\pi$ par rapport aux signaux $S_{ij}(T_{ij}(P))$ correspondant aux trajets dont l'angle $\theta_{ij}(P)$ est voisin de la valeur nulle.

8. Dispositif selon la revendication 7, dans lequel les émetteurs sont disposés linéairement selon un premier axe.

9. Dispositif selon la revendication 7, dans lequel les émetteurs sont disposés sous forme matricielle selon un premier et un deuxième axe.

10. Dispositif selon l'une des revendications 7 à 9, dans lequel les récepteurs sont disposés linéairement selon un troisième axe.

11. Dispositif selon l'une des revendications 7 à 9, dans lequel les récepteurs sont disposés sous forme matricielle selon un troisième et un quatrième axe.

12. Dispositif selon l'une des revendications 10 et 11, prise avec l'une des revendications 8 et 9, dans lequel le premier et le troisième axe sont parallèles.

13. Dispositif selon les revendications 9, 11 et 12, dans lequel le deuxième et le quatrième axe sont parallèles.

14. Dispositif selon la revendication 7, dans lequel les émetteurs et/ou les récepteurs présentent une forme annulaire.

**Patentansprüche**

1. Ultraschallbildgebungsverfahren zum Abbilden eines Teils (1), wobei das Verfahren die folgenden Schritte beinhaltet:

■ Erfassen (712) eines Satzes von $M \times N$ Ultraschallsignalen $S_{ij}(t)$, wobei $M$ die Anzahl von Sendern ist, die ein Ultraschallsignal in dem abzubildenden Teil (1) senden können, wobei $N$ die Anzahl von Empfängern ist, die eines der von dem abzubildenden Teil kommenden Ultraschallsignale $S_{ij}(t)$ empfangen können, wobei der Index $i$ einen der Sender bedeutet, wobei der Index $j$ einen der Empfänger bedeutet und $t$ eine die Zeit repräsentierende Variable ist;
■ für jeden Punkt $P$ einer Zone (6) des abzubildenden Teils und für jedes Sender-Empfänger-Paar $ij$:

- Bestimmen (73) einer Flugzeit $T_{ij}(P)$, die einer theoretischen Dauer entspricht, die das Ultraschallsignal $S_{ij}(t)$ benötigt, um einen Weg vom Sender $i$ zum Empfänger $j$ zurückzulegen und dabei durch den Punkt $P$ zu passieren;
- Bestimmen (91) eines Winkels $\theta_{ij}(P)$, der zwischen einem Abschnitt des Weges (82), der am Punkt $P$ ankommt, und einem Abschnitt des Weges (83) gebildet wird, der den Punkt $P$ verlässt;

■ Bestimmen (92), für jeden Punkt $P$, einer gewichteten Summe $I(P)$ der aus den Signalen $S_{ij}(t)$ zu den Flugzeiten $T_{ij}(P)$ extrahierten Amplituden, die dem betrachteten Punkt P entsprechen:

$$I(P) = \sum_{i=1}^{N} \sum_{j=1}^{M} f\left(\theta_{ij}(P)\right).S_{ij}\left(T_{ij}(P)\right)$$

wobei $f(\theta_{ij}(P))$ eine Gewichtungsfunktion ist, die so bestimmt wird, dass die Signale $S_{ij}(T_{ij}(P))$, die den Wegen

entsprechen, deren Winkel $\theta_{ij}(P)$ nahe $\pi$ liegt, in Bezug auf die Signale $S_{ij}(T_{ij}(P))$ gedämpft werden, die den Wegen entsprechen, deren Winkel $\theta_{ij}(P)$ nahe null liegt.

2. Verfahren nach Anspruch 1, wobei die Gewichtungsfunktion $f(\theta_{ij}(P))$ eine Schwellenfunktion ist, die den Wert null für die im Bereich der Werte $[\pi - \theta_{Schwelle}; \pi + \theta_{Schwelle}]$ enthaltenen Winkel $\theta_{ij}(P)$ und den Wert eins für die anderen Winkel annimmt.

3. Verfahren nach Anspruch 1, wobei die Gewichtungsfunktion $f(\theta_{ij}(P))$ eine lineare Funktion, die den Wert null für einen Winkel $\theta_{ij}(P)$ von im Wesentlichen gleich $\pi$ und den Wert eins für einen Winkel $\theta_{ij}(P)$ von im Wesentlichen gleich null annimmt.

4. Verfahren nach Anspruch 1, wobei die Gewichtungsfunktion $f(\theta_{ij}(P))$ wie folgt definiert wird:

$$f\left(\theta_{ij}(P)\right) = cos^2\left(\theta_{ij}(P)/2\right)$$

5. Verfahren nach einem der vorherigen Ansprüche, wobei jeder Weg zwischen einem Sender $i$ und einem Empfänger $j$ aus mehreren Abschnitten (81, 82, 83) besteht, wobei jeder Abschnitt zwischen zwei aufeinander folgenden Interaktionspunkten definiert wird, wobei die Interaktionspunkte die Sender $i$, die Empfänger $j$, die Punkte $P$ und die Reflexionsflächen (3, 5) des abzubildenden Teils (1) sind, wobei jede Serie von Interaktionspunkten einen Modus definiert, wobei eine gewichtete Summe $I(P)$ für jeden Modus bestimmt wird.

6. Verfahren nach Anspruch 5, wobei die Flugzeiten $T_{ij}(P)$ in Abhängigkeit von einer Polarisation des Ultraschallsignals in jedem Abschnitt des Wegs (81, 82, 83) zwischen dem betrachteten Sender $i$ und Empfänger $j$ bestimmt werden.

7. Vorrichtung zur Ultraschallbildgebung, die das Abbilden eines Teils zulässt, wobei die Vorrichtung Folgendes umfasst:

- $M$ Sender (4), die ein Ultraschallsignal in das abzubildende Teil (1) senden können;
- $N$ Empfänger (4), die eines der $M \times N$ Ultraschallsignale $S_{ij}(t)$ empfangen können, wobei der Index $i$ einen der Sender bedeutet, der Index $j$ einen der Empfänger bedeutet und $t$ eine die Zeit repräsentierende Variable ist;
- erste Verarbeitungsmittel zum Bestimmen, für jeden Punkt $P$ einer Zone des abzubildenen Teils und für jedes Sender-Empfänger-Paar $ij$, einer Flugzeit $T_{ij}(P)$, die einer theoretischen Dauer entspricht, die das Ultraschallsignal $S_{ij}(t)$ benötigt, um einen Pfad vom Sender $i$ zum Empfänger $j$ zurückzulegen und dabei durch den Punkt P zu passieren;
- zweite Verarbeitungsmittel zum Bestimmen, für jeden Punkt $P$ einer Zone des abzubildenden Teils und für jedes Sender-Empfänger-Paar $ij$, eines Winkels $\theta_{ij}(P)$, der zwischen einem Abschnitt des Wegs (82) bis zur Ankunft am Punkt P und einem den Punkt P verlassenden Abschnitt des Wegs (83) gebildet wird;
- dritte Verarbeitungsmittel zum Bestimmen, für jeden Punkt P, einer gewichteten Summe $I(P)$ der aus den Signalen $S_{ij}(t)$ zu den Flugzeiten $T_{ij}(P)$ extrahierten Amplituden entsprechend dem betrachteten Punkt P:

$$I(P) = \sum_{i=1}^{N} \sum_{j=1}^{M} f\left(\theta_{ij}(P)\right).S_{ij}\left(T_{ij}(P)\right)$$

wobei $f(\theta_{ij}(P))$ eine Gewichtungsfunktion ist, so bestimmt, dass die Signale $S_{ij}(T_{ij}(P))$ gedämpft werden, die den Wegen entsprechen, deren Winkel $\theta_{ij}(P)$ nahe $\pi$ liegt, in Bezug auf die Signale $S_{ij}(T_{ij}(P))$, die den Wegen entsprechen, deren Winkel $\theta_{ij}(P)$ nahe null liegt.

8. Vorrichtung nach Anspruch 7, wobei die Sender linear entlang einer ersten Achse angeordnet sind.

9. Vorrichtung nach Anspruch 7, wobei die Sender in Form einer Matrix entlang einer ersten und einer zweiten Achse angeordnet sind.

10. Vorrichtung nach einem der Ansprüche 7 bis 9, wobei die Empfänger linear entlang einer dritten Achse angeordnet sind.

11. Vorrichtung nach einem der Ansprüche 7 bis 9, wobei die Empfänger in Form einer Matrix entlang einer dritten und einer vierten Achse angeordnet sind.

12. Vorrichtung nach einem der Ansprüche 10 bis 11, mit einem der Ansprüche 8 und 9 genommen, wobei die erste und die dritte Achse parallel sind.

13. Vorrichtung nach den Ansprüchen 9, 11 und 12, wobei die zweite und die vierte Achse parallel sind.

14. Vorrichtung nach Anspruch 7, wobei die Sender und/oder Empfänger eine Ringform haben.

**Claims**

1. An ultrasound imaging method for imaging a part (1), the method comprising the following steps:

   - acquiring (712) a set of $M \times N$ ultrasound signals $S_{ij}(t)$, where $M$ is the number of transmitters capable of transmitting an ultrasound signal in said part (1) to be imaged, $N$ is the number of receivers capable of receiving one of the ultrasound signals $S_{ij}(t)$ originating from the part to be imaged, the index $i$ denoting one of the transmitters, the index $j$ denoting one of the receivers and t being a variable representing time;
   - for each point $P$ of a zone (6) of the part to be imaged and for each transmitter-receiver pair $ij$,

     - determining (73) a flight time $T_{ij}(P)$ that corresponds to a theoretical duration needed for the ultrasound signal $S_{ij}(t)$ to cover a path from the transmitter $i$ to the receiver $j$, while passing through point $P$;
     - determining (91) an angle $\theta_{ij}(P)$ formed between a portion of the path (82) arriving at point $P$ and a portion of the path (83) leaving point $P$;

   - determining (92), for each point P, a weighted sum $I(P)$ of the amplitudes extracted from the signals $S_{ij}(t)$ at the flight times $T_{ij}(P)$ that correspond to the considered point $P$:

$$I(P) = \sum_{i=1}^{N} \sum_{j=1}^{M} f\left(\theta_{ij}(P)\right).S_{ij}\left(T_{ij}(P)\right)$$

   where $f(\theta_{ij}(P))$ is a weighting function that is determined so as to attenuate the signals $S_{ij}(T_{ij}(P))$ that correspond to the paths for which the angle $\theta_{ij}(P)$ is close to $\pi$ compared to the signals $S_{ij}(T_{ij}(P))$ that correspond to the paths for which the angle $\theta_{ij}(P)$ is close to the zero value.

2. The method according to claim 1, wherein the weighting function $f(\theta_{ij}(P))$ is a threshold function assuming the zero value for the angles $\theta_{ij}(P)$ included in a range of values $[\pi - \theta_{threshold}; \pi + \theta_{threshold}]$ and the value of one for the other angles.

3. The method according to claim 1, wherein said weighting function $f(\theta_{ij}(P))$ is a linear function assuming the zero value for an angle $\theta_{ij}(P)$ that is substantially equal to $\pi$ and the value of one for an angle $\theta_{ij}(P)$ that is substantially equal to the zero value.

4. The method according to claim 1, wherein said weighting function $f(\theta_{ij}(P))$ is defined as follows:

$$f\left(\theta_{ij}(P)\right) = cos^2\left(\theta_{ij}(P)/2\right)$$

5. The method according to any one of the preceding claims, wherein each path between a transmitter $i$ and a receiver $j$ is made up of a plurality of portions (81, 82, 83), each portion being defined between two successive interaction points, the interaction points being the transmitters $i$, the receivers $j$, the points $P$ and the reflection surfaces (3, 5) of the part (1) to be imaged, each series of interaction points defining a mode, a weighted sum $I(P)$ being determined for each mode.

6. The method according to claim 5, wherein the flight times $T_{ij}(P)$ are determined as a function of a biasing of the ultrasound signal in each portion of the path (81, 82, 83) between the considered transmitter $i$ and receiver $j$.

7. A device for ultrasound imaging allowing a part to be imaged, the device comprising:

- $M$ transmitters (4) capable of transmitting an ultrasound signal in the part (1) to be imaged;
- $N$ receivers (4) capable of receiving one of the $M \times N$ ultrasound signals $S_{ij}(t)$, where the index $i$ denotes one of the transmitters, the index $j$ denotes one of the receivers and $t$ is a variable representing time;
- first processing means for determining, for each point P of a zone of the part to be imaged and for each transmitter-receiver pair $ij$, a flight time $T_{ij}(P)$ that corresponds to a theoretical duration needed for the ultrasound signal $S_{ij}(t)$ to cover a path from the transmitter $i$ to the receiver $j$, while passing through point $P$;
- second processing means for determining, for each point $P$ of a zone of the part to be imaged and for each transmitter-receiver pair $ij$, an angle $\theta_{ij}(P)$ formed between a portion of the path (82) arriving at point $P$ and a portion of the path (83) leaving point $P$;
- third processing means for determining, for each point P, a weighted sum $I(P)$ of the amplitudes extracted from the signals $S_{ij}(t)$ at the flight time $T_{ij}(P)$ that corresponds to the considered point $P$:

$$I(P) = \sum_{i=1}^{N} \sum_{j=1}^{M} f\left(\theta_{ij}(P)\right) . S_{ij}\left(T_{ij}(P)\right)$$

,

where $f(\theta_{ij}(P))$ is a weighting function determined so as to attenuate the signals $S_{ij}(T_{ij}(P))$ that correspond to the paths for which the angle $\theta_{ij}(P)$ is close to $\pi$ compared to the signals $S_{ij}(T_{ij}(P))$ that correspond to the paths for which the angle $\theta_{ij}(P)$ is close to the zero value.

8. The device according to claim 7, wherein the transmitters are linearly disposed along a first axis.

9. The device according to claim 7, wherein the transmitters are disposed in the form of a matrix along a first and a second axis.

10. The device according to any one of claims 7 to 9, wherein the receivers are linearly disposed along a third axis.

11. The device according to any one of claims 7 to 9, wherein the receivers are disposed in the form of a matrix along a third and a fourth axis.

12. The device according to any one of claims 10 to 11, taken with one of claims 8 and 9, wherein said first and said third axis are parallel.

13. The device according to claims 9, 11 and 12, wherein the second and the fourth axis are parallel.

14. The device according to claim 7, wherein the transmitters and/or the receivers have an annular shape.

FIG. 1

FIG. 2

FIG. 3A

FIG. 3B

FIG. 4

FIG. 5A

FIG. 5B

FIG. 6A

FIG. 6B

ÉMISSION D'UNE ONDE ULTRASONORE PAR LES M ÉMETTEURS DU TRADUCTEUR ULTRASONORE — 71

712

RÉCEPTION D'UN ÉCHO DE CHAQUE ONDE PAR LES N RÉCEPTEURS DU TRADUCTEUR ULTRASONORE — 72

$S_{ij}(t)$

DÉTERMINATION DES TEMPS DE VOL $T_{ij}(P)$ — 73

DÉTERMINATION DES SOMMES $I(P)$ — 74

## FIG. 7

ÉMISSION D'UNE ONDE ULTRASONORE PAR LES M ÉMETTEURS DU TRADUCTEUR ULTRASONORE — 71

712

RÉCEPTION D'UN ÉCHO DE CHAQUE ONDE PAR LES N RÉCEPTEURS DU TRADUCTEUR ULTRASONORE — 72

$S_{ij}(t)$

DÉTERMINATION DES TEMPS DE VOL $T_{ij}(P)$ — 73

DÉTERMINATION DES ANGLES $\theta_{ij}(P)$ — 91

DÉTERMINATION DES SOMMES PONDÉRÉES $I(P)$ — 92

## FIG. 9

FIG. 8A

FIG. 8B

FIG. 8C

FIG. 10A

FIG. 10B

FIG. 10C

FIG. 11A

FIG. 11B

FIG. 11C

FIG. 12A

FIG. 12B

FIG. 12C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P.CALMON et al.** Model based reconstruction of UT array data. *AIP conférence proceedings,* 01 Janvier 2008, vol. 975, 699-706